Europäisches Patentamt

European Patent Office

Office européen des brevets

(19)

(11) Numéro de publication: **0 353 159**
A1

## (12) DEMANDE DE BREVET EUROPEEN

(21) Numéro de dépôt: **89402151.8**

(22) Date de dépôt: **28.07.89**

(51) Int. Cl.⁵: **B 65 G 33/26**
A 01 C 1/08, B 07 B 1/20,
B 65 G 33/24

(30) Priorité: **29.07.88 FR 8810246**
**03.03.89 FR 8902754**

(43) Date de publication de la demande:
**31.01.90 Bulletin 90/05**

(84) Etats contractants désignés:
**AT BE CH DE ES GB GR IT LI LU NL SE**

(71) Demandeur: **Reine, Michel Albert Gaston**
**4 Impasse du Riong**
**F-77710 Vaux sur Lunain (FR)**

(72) Inventeur: **Reine, Michel Albert Gaston**
**4 Impasse du Riong**
**F-77710 Vaux sur Lunain (FR)**

(74) Mandataire: **Vander-Heym, Serge**
**CABINET R. VANDER-HEYM 172, Boulevard Voltaire**
**F-75011 Paris (FR)**

(54) Dispositif de manutention de produits granuleux.

(57) Dispositif de manutention de produits granuleux du genre de ceux constitués par un tube (1) comportant intérieurement une vis d'Archimède entraînée en rotation, caractérisé en ce que l'on utilise utilise une brosse (2) dont les brins sont disposés selon une hélice, les extrémités desdits brins s'étendant jusqu'à la paroi interne du tube (1).

La partie inférieure du tube située vers l'extrémité d'introduction du grain présente une grille (7),amovible,dont les perforations sont adaptées aux dimensions du produit à traiter.

Fig.1

EP 0 353 159 A1

**Description**

La présente invention est relative à un dispositif de manutention de produits granuleux plus particulièrement mais non exclusivement destiné aux graines de semences et permettant l'enrobage des grains à l'aide d'un produit de traitement.

On connaît des dispositifs de manutention constitués par une vis d'Archimède rigide disposée dans un tube, le produit étant introduit à une extrémité et étant expulsé à l'autre sous l'effet de la rotation de la vis.

Un tel dispositif ne donne pas satisfaction lorsqu'il est appliqué à des produits constitués par des grains fragiles, tels que des graines de semence. On a constaté, en effet, qu'en raison du jeu existant entre la périphérie de la vis et la paroi interne du tube, certaines graines pouvaient être écrasées. La solution consistant à déterminer le jeu en fonction du diamètre de la graine à traiter ne donne pas satisfaction non plus puisque dans ce cas le dispositif ne peut pas être utilisé pour des graines présentant une grosseur différente.

Par le brevet FR N° 2 609 456 on connaît un dispositif utilisant une brosse hélicoïdale mais ce dispositif ne règle pas le problème de l'élimination des brisures.

Selon l'invention, le tube présente à sa partie inférieure une grille dont les perforations sont adaptées aux dimensions du produit à traiter et contre laquelle frottent les extrémités des poils d'une brosse hélicoïdale.

D'autres caractéristiques et avantages ressortiront mieux de la description qui va suivre faite en se référant aux dessins annexés à titre d'exemple indicatif seulement, sur lesquels:

La figure 1 est une vue en élévation d'un dispositif conforme à l'invention ;

La figure 2 est une vue en coupe, à plus grande échelle, effectuée selon la ligne II-II de la figure 1;

La figure 3 est une vue partielle, en élévation, montrant la brosse conforme à l'invention ;

La figure 4 est une vue partielle et à plus grande échelle effectuée par un plan passant par l'axe de la brosse.

En se reportant aux dessins et de la façon connue, on voit que le dispositif est constitué essentiellement par un tube 1 comportant intérieurement une vis d'Archimède 2.

Le produit à traiter est introduit par la trémie 3 et est recueilli à l'autre extrémité par une manche 4.

Selon l'invention, le filet de la vis 2 est constitué par des brins souples, tels que des poils dont les extrémités s'étendent jusqu'à la paroi interne du tube.

De cette façon, tous risques de coincement et d'écrasement du produit sont écartés ce qui est très important lorsqu'il s'agit de graines de semence.

De plus, comme les graines ne peuvent pas s'infiltrer entre la brosse et la proi interne du tube, il est possible d'obtenir une vidange totale de ce dernier.

Lorsque les graines doivent être enrobées à l'aide d'un produit de traitement, le tube 1 comporte solidairement un réservoir 5 permettant, par un injecteur 6 d'introduire ledit produit dans le tube, la rotation de la vis 2 assurant le brassage des grains et, par suite, leur enrobage.

Avec les dispositifs actuels, il est nécessaire de tamiser le grain pour évacuer les poussières et brisures avant de l'introduire dans le tube 1.

Un des avantages de l'invention est de supprimer cette opération préliminaire.

A cet effet, la partie inférieure du tube située vers la trémie d'introduction 3 est découpée pour créer une ouverture qui est obturée par une grille 7, amovible, épousant les contours du tube et dont les perforations sont adaptées aux grains à traiter.

Lorsque le grain pénètre dans le tube 1, la brosse 2 qui frotte contre la face interne de la grille 7 expulse, vers l'extérieur, les poussières et brisures.

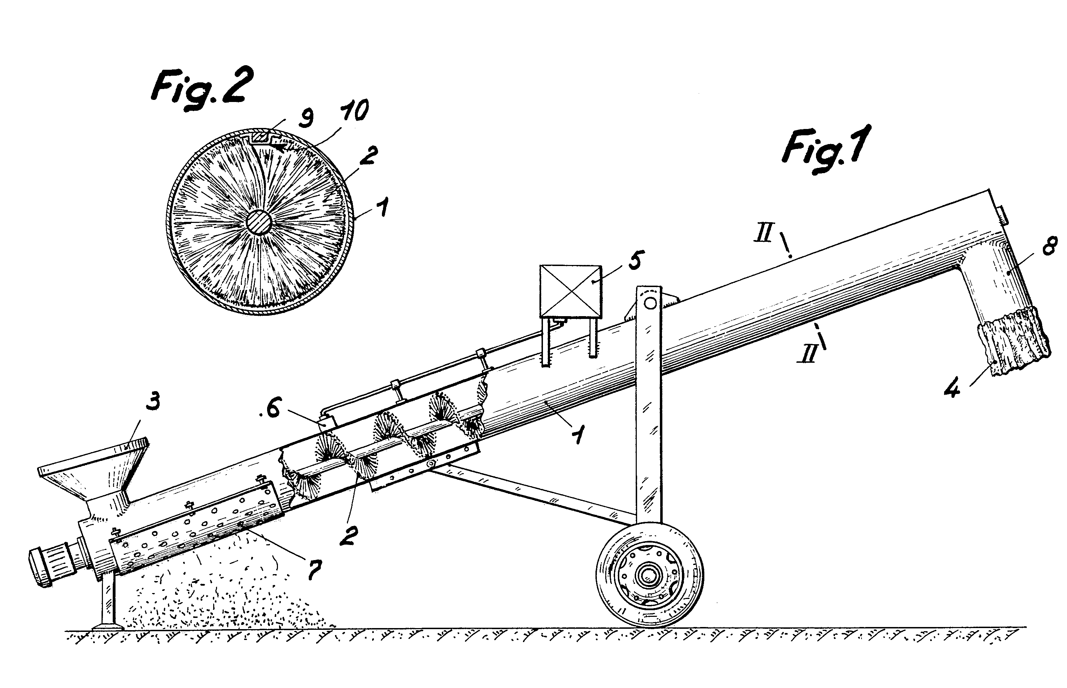

Comme cela ressort de la figure 1, le gicleur 6 est situé en aval de la grille 7 de façon à déverser le produit uniquement sur des grains calibrés.

On utilise parfois des produits de traitement dont le dosage par rapport à la masse de grains doit être précis. Dans ce cas, il n'est pas possible de déverser le produit de façon continue en réglant le débit sur celui de la vis car celui-ci est inconnu, le pourcentage de brisures étant très variable.

Selon l'invention, on remédie à cet inconvénient en mesurant la masse de grains qui sort du tube et en injectant dans celui-ci la quantité de produit qui est nécessaire pour traiter cette quantité.

Un tel résultat peut être obtenu, par exemple, en interposant à la sortie du tube 1, un boisseau 8 dont le fond pivotant est maintenu par un ressort taré. Lorsque le boisseau est plein, la pression sur le fond est supérieure à la force du ressort précité et ledit fond pivote pour permettre aux grains d'être évacués par la manche 4. Dès lors, on comprend qu'il est très facile d'utiliser la rotation du fond du boisseau pour commander l'injection d'une dose de produit de traitement.

Selon une autre caractéristique de l'invention, des moyens sont prévu pour s'opposer à l'encrassement des poils de la brosse par le produit de traitement.

Un tel résultat peut être obtenu en disposant, dans le tube, le long de sa génératrice supérieure, une barre 9 qui force les poils de la brosse 2 à s'incurver à sa rencontre ( figure 2).

La barre 9 peut être amovible et maintenue par des pontets 10. Dans ce cas, il est très facile de nettoyer la barre en la déplaçant longitudinalement, les pontets 10 faisant alors office de racleurs.

Un résultat analogue peut être obtenu en ovalisant le tube 1 pour lui donner une section élliptique, le grand diamètre de l'ellipse étant égal au diamètre de la brosse.

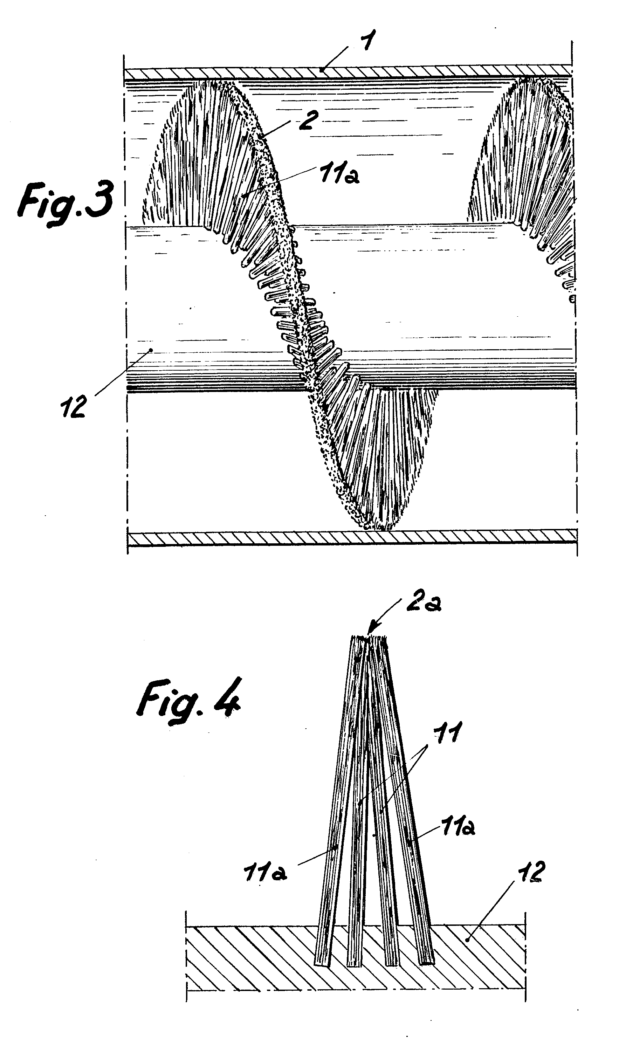

On va maintenant décrire, en regard des figures 3 et 4 une brosse particulièrement adaptée au résultat recherché.

Selon l'invention, les brins de la brosse sont groupés en loquets 11 et les loquets 11ₐ externes sont inclinés l'un vers l'autre, dans un plan passant par l'axe du moyeu 12, de façon à converger à leur extrémité libre. Les loquets intermédiaires convergent de la même façon. En d'autres termes, les brins sont disposés selon les côtés de triangles isocèles.

Un tel filet peut comporter un loquet médian (non représenté) qui est disposé perpendiculairement à l'axe du moyeu.

Comme cela ressort des dessins, la largeur de la périphérie $2_a$ de la brosse est très réduite par rapport à sa base.

Cette disposition présente, notamment, l'avantage de réduire les frottements avec la paroi interne du tube 1 et d'augmenter la rigidité du filet, d'où une meilleure étanchéité et la possibilité d'un débit important.

**Revendications**

1- Dispositif de manutention de produits granuleux permettant l'enrobage desdits produits et comportant un tube pourvu intérieurement d'une brosse hélicoïdale, caractérisé en ce que le tube (1) présente à sa partie inférieure une grille (7) dont les perforations sont adaptées aux dimensions du produit à traiter et contre laquelle frottent les extrémités des poils de la brosse (2).

2- Dispositif de manutention de produits granuleux, selon la revendication 1, caractérisé en ce que la grille (7) est amovible.

3- Dispositif de manutention de produits granuleux, selon l'une quelconque des revendications 1 et 2, caractérisé en ce que le produit est introduit dans le tube en un point situé en aval de la grille (7).

4- Dispositif de manutention de produits granuleux, selon l'une quelconque des revendications 1 à 3, caractérisé en ce qu'on mesure la quantité de produit qui sort du tube et en ce que l'on introduit alors dans le tube juste la quantité nécessaire de produit de traitement pour traiter une quantité égale à celle qui en est sortie.

5- Dispositif de manutention de produits granuleux, selon l'une quelconque des revendications 1 à 4, caractérisé en ce que des moyens sont prévus pour s'opposer à l'encrassement de la brosse.

6- Dispositif de manutention de produits granuleux, selon l'une quelconque des revendications 1 à 5, caractérisé en ce que la largeur du filet de la vis en brins souples décroit du moyeu (12) jusqu'à l'extrémité libre (2a) des brins.

7- Dispositif de manutention de produits granuleux, selon la revendication 6, caractérisé en ce que dans un plan de coupe passant par l'axe du moyeu de la brosse, les brins sont disposés selon les côtés de triangles isocèles.

*Fig.2*

*Fig.1*

EP 0 353 159 A1

EP 0 353 159 A1

Fig.3

1

2

11a

12

Fig.4

2a

11

11a

11a

12

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | GB-A- 882 652 (PLANT PROTECTION) <br> * En entier * | 1,2 | B 65 G 33/26 <br> A 01 C 1/08 <br> B 07 B 1/20 <br> B 65 G 33/24 |
| A | | 4 | |
| | --- | | |
| Y | EP-A-0 051 550 (TRANSITUBE PROJET) <br> * Figures * | 1,2 | |
| | --- | | |
| Y | FR-A- 426 199 (BAMFORD) <br> * En entier * | 1,2 | |
| | --- | | |
| A | FR-A-2 301 363 (MAS) <br> * Figure 2 * | 6,7 | |
| | ----- | | |

| | DOMAINES TECHNIQUES RECHERCHES (Int. Cl.5) |
|---|---|
| | B 65 G <br> A 01 C <br> B 07 B |

Le présent rapport a été établi pour toutes les revendications

| Lieu de la recherche | Date d'achèvement de la recherche | Examinateur |
|---|---|---|
| LA HAYE | 24-10-1989 | OSTYN T.J.M. |